# EUROPEAN PATENT SPECIFICATION

(11) **EP 4 273 038 B1**
(45) Date of publication and mention of the grant of the patent: **04.11.2026**
(21) Application number: 23158206.5
(22) Date of filing: 23.02.2023
(51) Int. Cl.: B64C 9/02, F16C 11/04

(54) **HINGE MECHANISMS FOR COUPLING FLIGHT CONTROL MEMBERS TO AIRCRAFT COMPONENTS AND ASSOCIATED METHODS**
SCHARNIERMECHANISMEN ZUR KOPPLUNG VON FLUGSTEUERELEMENTEN AN FLUGZEUGKOMPONENTEN UND ZUGEHÖRIGE VERFAHREN
MÉCANISMES DE CHARNIÈRE POUR COUPLER DES ÉLÉMENTS DE COMMANDE DE VOL À DES COMPOSANTS D'AÉRONEF ET PROCÉDÉS ASSOCIÉS

(30) Priority: 02.05.2022 US 202217661588
(43) Date of publication of application: 08.11.2023
(73) Proprietor: The Boeing Company, Arlington, VA 22202 (US)
(72) Inventor: TSAI, Kevin R., Arlington, 22202 (US)
(74) Representative: Kilburn & Strode LLP

(56) References cited:
- GB-A- 734 446
- US-A1- 2011 135 472
- US-B2- 10 538 303

## Description

### FIELD

The present disclosure is generally related to hinge mechanisms and, more specifically, to hinge mechanisms for hingedly coupling flight control members to aircraft components and associated methods.

### BACKGROUND

Aircraft components, such as aircraft wings, include members that are movable between at least two positions to facilitate aerodynamic properties, such as flight control surfaces. In order to facilitate movement of the flight control surfaces between stowed and deployed positions, aircraft wings typically have cut-out or removed portions for the flight control surfaces and associated hinges to nest in the wing in the stowed position. Drawbacks to these cut-out designs include high speed drag.

Accordingly, those skilled in the art continue research and development in the field of hingedly coupling flight control members to aircraft components and associated methods thereof.

US10538303B2, according to its abstract, states various techniques for a high clearance hinge linkage. In one example, a system includes a hinge linkage configured to couple an aircraft beam to an aircraft panel. The hinge linkage includes an aircraft beam fitting configured to couple to a web of the aircraft beam and be disposed between an upper flange and a lower flange of the aircraft beam, an aircraft panel fitting coupled to the aircraft panel, and a plurality of links. The plurality of links couple the aircraft beam fitting to the aircraft panel fitting and are configured to articulate to move the aircraft panel between at least a closed position and an open position. In certain examples, an edge of the aircraft panel is substantially aligned with a portion of the aircraft beam web in the closed position.

### SUMMARY

Disclosed are hinge mechanisms for hingedly coupling a flight control member having a top surface to an aircraft component having a top surface.

According to a first aspect, a hinge mechanism as defined in claim 1 is provided.

Also disclosed are aircraft including the hinge mechanism for coupling a flight control member to an aircraft component.

According to a second aspect, an aircraft as defined in claim 10 is provided.

Also disclosed are methods for actuating a flight control member having a top surface relative to an aircraft component having a top surface between at least a stowed position to a deployed position with an actuator.

According to a third aspect, a method as defined in claim 11 is provided. Optional features to the first, second and third aspects are set out in the dependent claims.

Other examples of the disclosed hinge mechanisms, aircraft, and methods will become apparent from the following detailed description, the accompanying drawings, and the appended claims.

### BRIEF DESCRIPTION OF THE DRAWINGS

FIG. 1 is a side schematic of a hinge mechanism, according to an embodiment of the claims, in a stowed position;
FIG. 2 is a perspective schematic of a portion of the hinge mechanism of FIG. 1;
FIG. 3 is a side schematic of the hinge mechanism of FIG. 1 in a deployed position;
FIG. 4 is a perspective schematic of a portion of the hinge mechanism of FIG. 1 in a deployed position;
FIG. 5 is a perspective schematic of a portion of an aircraft with the hinge mechanism of FIG. 1;
FIG. 6 is a flow diagram of a method for hingedly coupling a flight control member to an aircraft component;
FIG. 7 is a flow diagram of an aircraft manufacturing and service methodology; and
FIG. 8 is a schematic block diagram of an example of an aircraft.

### DETAILED DESCRIPTION

The following detailed description refers to the accompanying drawings, which illustrate specific examples described by the present disclosure. Like reference numerals may refer to the same feature, element, or component in the different drawings.

The disclosed hinge mechanism enables a flight control member, such as a spoiler, to rotate without the creation of cutouts in the upper panel in front of the spoiler. This also enables the panel to be effectively larger when deployed. Current solutions require cutouts for the lug to rotate up and through the panel in front of them. This creates high speed drag. Additionally, the spoiler leading edge typically must be moved aft to prevent the leading edge from rotating into the wing structure in front of it. A mechanism which re-creates the motion of a hinge but with natural gooseneck hinge features. This enables improved integration of a hinged device so that it can perform better. This motion enables the panel to be effectively larger when deployed.

The disclosed hinge mechanism may utilize a 4-bar mechanism (paired crank sliders) that re-creates the motion of a hinge but with natural gooseneck hinge features, adapted for use in aircraft hinges such as for spoilers. 4-bar mechanism concept known and implemented in architecture, home furnishings, etc. Solves issues of leaving gaps for hinges, and enables spoiler panel moved by mechanism to have more complex motion, effectively increasing area when deployed. Adaptable to Krueger flaps and landing gear doors. There are many hinged items on the aircraft that may utilize the disclosed hinge mechanism 100, including but not limited to spoilers, Krueger flaps, gear doors and access panels. Often the integration of the hinge causes integration constraints or other undesirable effects. This disclosed hinge mechanism enables the replication of a hingeline through a 4-bar mechanism which offers a different integration space. This can provide an expanded design space for the trajectory of the hinged item and offer a better integration space.

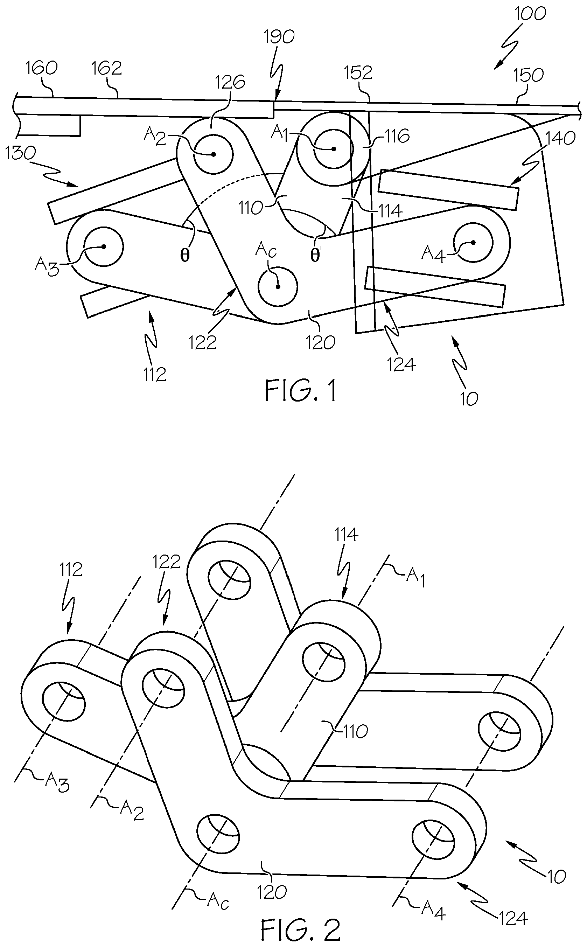

Referring to FIG. 1, disclosed is a hinge mechanism 100 for hingedly coupling a flight control member 150 to an aircraft component 160. The flight control member 150 has a top surface 152 and may be any aerodynamic surface that is movable relative to the aircraft component 160 between at least a stowed position 10 and a deployed position 20. The flight control member 150 may be a flight control surface. In one example, the flight control member 150 is a spoiler. In another example, the flight control member 150 is an aileron. In yet another example, the flight control member 150 is a Krueger Flap.

In one example, the aircraft component 160 is a wing of an aircraft. In another example, the aircraft component 160 is a horizontal stabilizer of an aircraft. In yet another example, the aircraft component 160 is a rib of a wing spar.

The hinge mechanism 100 includes a first hinge member 110 pivotably coupled to the flight control member 150 about a first axis A₁ and slidingly coupled to the aircraft component 160. In one example, the first hinge member 110 is coupled to the flight control member 150 with a first rotating pin joint 116.

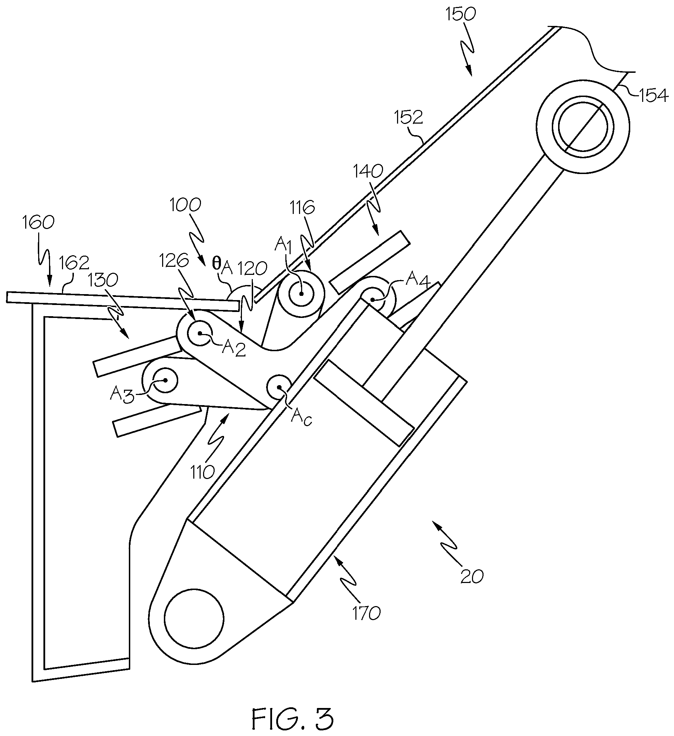

The first hinge member 110 and the second hinge member 120 are configured to cooperatively facilitate movement of the flight control member 150 relative to the aircraft component 160 between at least a stowed position 10 and a deployed position 20. In one example, the top surface 152 of the flight control member 150 is substantially aligned with the top surface 162 of the aircraft component 160 when the hinge mechanism 100 is in the stowed position 10. In another example, the top surface 152 of the flight control member 150 and the top surface 162 of the aircraft component 160 define an effectively continuous aerodynamic surface 190, FIG. 1 when the hinge mechanism 100 is in the stowed position 10. In yet a further example, the top surface 152 of the flight control member 150 is offset from the top surface 162 of the aircraft component 160 when the hinge mechanism 100 is in the deployed position 20 such that the top surface 152 of the flight control member 150 and the top surface 162 of the aircraft component 160 define an aerodynamic angle θ_{A}, FIG. 3.

Referring to FIG. 1 and FIG. 2, in one or more examples, the first hinge member 110 comprises a first extension 112 and a second extension 114 that radially extend from the central axis A_{C}. In one example, the first extension 112 and a second extension 114 define an angle θ. The angle θ may be about 80° to about 120°. In one example, the first hinge member 110 is a single, monolithic structure.

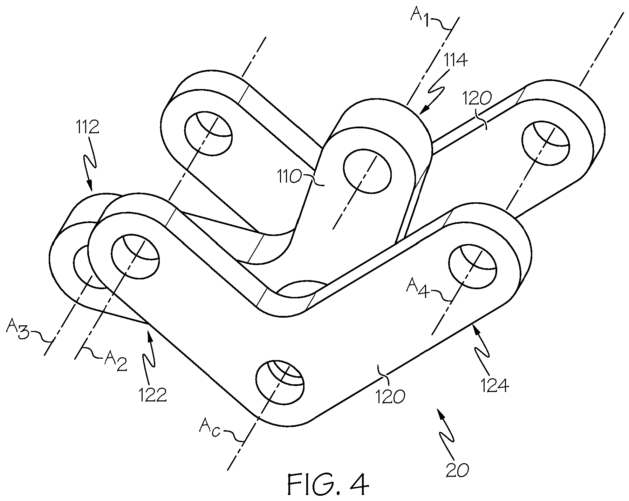

Referring to FIG. 1, the hinge mechanism 100 further includes a second hinge member 120 pivotably coupled to the aircraft component 160 about a second axis A₂ and slidingly coupled to the flight control member 150. The first hinge member 110 is pivotably coupled to the second hinge member 120 about a central axis A_{C}. In one example, the second hinge member 120 is coupled to the aircraft component 160 with a second rotating pin joint 126. Further, in one or more examples, the first hinge member 110 is pivotably rotatable about a third axis A₃ Referring to FIGs. 2 and 4, in one or more examples, the hinge mechanism 100 may include more than one a second hinge member 120 pivotably coupled to the aircraft component 160.

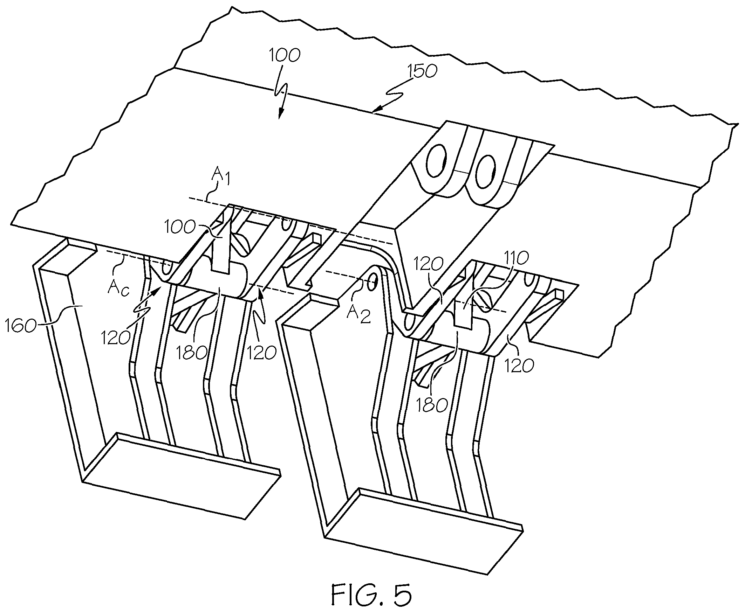

Referring to FIG. 5, the first hinge member 110 is pivotably coupled to the second hinge member 120 about a central rotating pin joint 180. The central rotating pin joint 180 rotates about the central axis A_{C}.

Referring to FIG. 1, in one or more examples, the second hinge member 120 comprises a second hinge first extension 122 and a second hinge second extension 124 that radially extend from the central axis A_{C}. In one example, the second hinge first extension 122 and the second hinge second extension 124 define a second angle θ'. The second angle θ' may be about 80° to about 120°. In one example, the angle θ of the first hinge member 110 and second angle θ' of the second hinge member 120 are substantially the same. In one example, the second hinge member 120 is a single, monolithic structure.

Referring to FIG. 1, in one or more examples, the hinge mechanism 100 further includes a first sliding track 130 coupled to the aircraft component 160. In one example, the third axis A₃ is configured to translate along the first sliding track 130 while the hinge mechanism 100 moves from a stowed position 10, FIG. 1 to a deployed position 20, FIG. 3.

Referring to FIG. 1, in one or more examples, the hinge mechanism 100 further includes a second sliding track 140 coupled to the flight control member 150. In one example, the fourth axis A₄ is configured to translate along the second sliding track 140.

Referring to FIG. 1, in one or more examples, the hinge mechanism 100 further includes an actuator 170 coupled to the flight control member 150 and the aircraft component 160. The actuator 170 may be automated such that it automatically actuates based upon a command or may be manually actuated. In one example, the actuator 170 is a pneumatic actuator, a hydraulic actuator, or a linear actuator. The actuator 170 may be mounted to a bottom surface 154 of the flight control member 150.

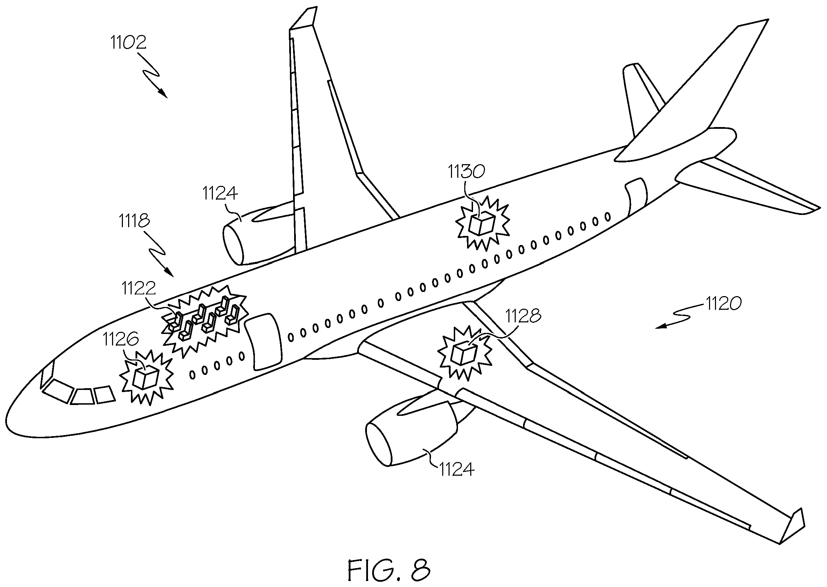

Also disclosed is an aircraft 1102, FIG. 8, comprising the hinge mechanism 100 disclosed herein. In one or more examples, the aircraft 1102 includes an aircraft component 160, a flight control member 150 having a top surface 152 hingedly coupled to and movable relative to the aircraft component 160 having a top surface 162, and a hinge mechanism 100 coupled to the aircraft component 160 and the flight control member 150. The hinge mechanism 100 includes a first hinge member 110 pivotably coupled to the flight control member 150 about a first axis A₁ and slidingly coupled to the aircraft component 160 and a second hinge member 120 pivotably coupled to the aircraft component 160 about a second axis A₂ and slidingly coupled to the flight control member 150.

The flight control member 150 may be a flight control surface. In one example, the flight control member 150 is a spoiler. In another example, the flight control member 150 is an aileron. In yet another example, the flight control member 150 is a Krueger Flap. In one example, the aircraft component 160 is a wing of an aircraft. In another example, the aircraft component 160 is a horizontal stabilizer of an aircraft. In yet another example, the aircraft component 160 is a rib of a wing spar.

In one or more examples the first hinge member 110 is pivotably coupled to the second hinge member 120 about a central axis A_{C}. Further, the first hinge member 110 and the second hinge member 120 are configured to cooperatively facilitate movement of the flight control member 150 relative to the aircraft component 160 between at least a stowed position 10, FIG. 1 and FIG. 2, and a deployed position 20, FIG. 3 and FIG. 4.

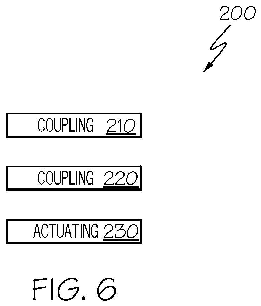

Referring to FIG. 6, disclosed is a method 200 for actuating a flight control member 150 having a top surface 152 relative to an aircraft component 160 having a top surface 162 between at least a stowed position 10 to a deployed position 20 with an actuator 170. In one example, the actuator 170 is a pneumatic actuator, a hydraulic actuator, or a linear actuator. The actuator 170 may be mounted to a bottom surface 154 of the flight control member 150.

Referring to FIG. 6, the method 200 includes coupling 210 a hinge mechanism 100 to the flight control member 150, coupling 220 the hinge mechanism 100 to the aircraft component 160, and actuating 230 the hinge mechanism 100 between at least the stowed position 10 and the deployed position 20. The coupling 210 and coupling 220 may include mounting the hinge mechanism 100 with any type of mechanical means or mechanical fasteners. In one example, the actuating 230 includes sliding the first hinge member 110 along the first sliding track 130 and sliding the second hinge member 120 along the second sliding track 140.

The hinge mechanism 100 of the method 200 includes a first hinge member 110, the first hinge member 110 being as previously described in relation to FIG 1.

Referring to FIG. 1, the hinge mechanism 100 of the method 200 further includes a second hinge member 120, the second hinge member 120 being as previously described in relation to FIG 1.

Referring to FIG. 3, in one or more examples, the second hinge member 120 comprises a second hinge first extension 122 and a second hinge second extension 124, the second hinge first extension 122 and the second hinge second extension 124 being as previously described in relation to FIG 1.

Referring to FIG. 1, in one or more examples, the hinge mechanism 100 of the method 200 further includes a first sliding track 130 coupled to the aircraft component 160, the first sliding track 130 being as previously described in relation to FIG 1.

Referring to FIG. 1, in one or more examples, the hinge mechanism 100 of the method 200 further includes a second sliding track 140 coupled to the flight control member 150. In one example, the fourth axis A₄ is configured to translate along the second sliding track 140.

Referring to FIG. 1, in one or more examples, the hinge mechanism 100 of the method 200 further includes an actuator 170 coupled to the flight control member 150 and the aircraft component 160. The actuator 170 may be automated such that it automatically actuates based upon a command or may be manually actuated. In one example, the actuator 170 is a pneumatic actuator.

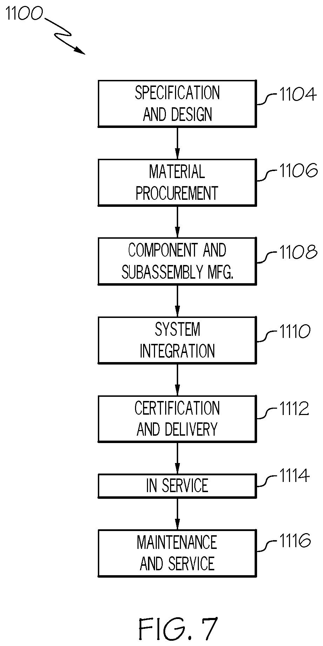

Examples of the present disclosure may be described in the context of aircraft manufacturing and service method 1100 as shown in FIG. 7 and aircraft 1102 as shown in FIG. 8. During pre-production, service method 1100 may include specification and design (block 1104) of aircraft 1102 and material procurement (Block 1106). During production, component and subassembly manufacturing (Block 1108) and system integration (Block 1110) of aircraft 1102 may take place. Thereafter, aircraft 1102 may go through certification and delivery (Block 1112) to be placed in service (Block 1114). While in service, aircraft 1102 may be scheduled for routine maintenance and service (Block 1116). Routine maintenance and service may include modification, reconfiguration, refurbishment, etc. of one or more systems of aircraft 1102.

Each of the processes of service method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in FIG. 8, aircraft 1102 produced by service method 1100 may include airframe 1118 with a plurality of high-level systems 1120 and interior 1122. Examples of high-level systems 1120 include one or more of propulsion system 1124, electrical system 1126, hydraulic system 1128, and environmental system 1130. Any number of other systems may be included. Although an aerospace example is shown, the principles disclosed herein may be applied to other industries, such as the automotive industry. Accordingly, in addition to aircraft 1102, the principles disclosed herein may apply to other vehicles, e.g., land vehicles, marine vehicles, space vehicles, etc.

Hinge mechanism(s), aircraft, and method(s) shown or described herein may be employed during any one or more of the stages of the manufacturing and service method 1100. For example, components or subassemblies corresponding to component and subassembly manufacturing (block 1108) may be fabricated or manufactured in a manner similar to components or subassemblies produced while aircraft 1102 is in service (Block 1114). Also, one or more examples of the hinge mechanism(s), aircraft, and method(s) or combination thereof may be utilized during production stages component and subassembly manufacturing (Block 1108) and system integration (Block 1110), for example, by substantially expediting assembly of or reducing the cost of aircraft 1102. Similarly, one or more examples of the system or method realizations, or a combination thereof, may be utilized, for example and without limitation, while aircraft 1102 is in service (Block 1114) and/or during maintenance and service (Block 1116).

Different examples of the hinge mechanism(s), aircraft, and method(s) disclosed herein include a variety of components, features, and functionalities. It should be understood that the various examples of the hinge mechanism(s), aircraft, and method(s) disclosed herein may include any of the components, features, and functionalities of any of the other examples of the hinge mechanism(s), aircraft, and method(s) disclosed herein in any combination, to the extent that the resulting embodiments fall within the scope of the claims.

The present disclosure is not to be limited to the specific examples illustrated and modifications and other examples that fall within the scope of the appended claims are possible.

Accordingly, parenthetical reference numerals in the appended claims are presented for illustrative purposes only and are not intended to limit the scope of the claimed subject matter to the specific examples provided in the present disclosure.

## Claims

1. A hinge mechanism (100) for hingedly coupling a flight control member (150) having a top surface (152) to an aircraft component (160) having a top surface (162), the hinge mechanism (100) comprising:
a first hinge member (110) configured to be pivotably coupled to the flight control member (150) about a first axis (A₁) and configured to be slidingly coupled to the aircraft component (160); and
a second hinge member (120) configured to be pivotably coupled to the aircraft component (160) about a second axis (A₂) and configured to be slidingly coupled to the flight control member (150),
wherein the first hinge member (110) is pivotably coupled to the second hinge member (120) about a central axis (A_{C}), and
wherein the first hinge member (110) and the second hinge member (120) are configured to cooperatively facilitate movement of the flight control member (150) relative to the aircraft component (160) between at least a stowed position (10) and a deployed position (20).

2. The hinge mechanism (100) of Claim 1, wherein the hinge mechanism (100) is configured such that the top surface (152) of the flight control member (150) is substantially aligned with the top surface (162) of the aircraft component (160) when the hinge mechanism (100) is in the stowed position (10).

3. The hinge mechanism (100) of Claim 1 or 2, wherein the hinge mechanism (100) is configured such that the top surface (152) of the flight control member (150) and the top surface (162) of the aircraft component (160) define an effectively continuous aerodynamic surface (190) when the hinge mechanism (100) is in the stowed position (10).

4. The hinge mechanism (100) of any preceding Claim, wherein the hinge mechanism (100) is configured such that the top surface (152) of the flight control member (150) is offset from the top surface (162) of the aircraft component (160) when the hinge mechanism (100) is in the deployed position (20) such that the top surface (152) of the flight control member (150) and the top surface (162) of the aircraft component (160) define an aerodynamic angle (θ_{A}).

5. The hinge mechanism (100) of any preceding Claim, wherein the first hinge member (110) comprises a first extension (112) and a second extension (114) that radially extend from the central axis (A_{C}), and wherein the first extension (112) and a second extension (114) define an angle (θ).

6. The hinge mechanism (100) of any preceding Claim, further comprising a first sliding track (130) configured to be coupled to the aircraft component (160).

7. The hinge mechanism (100) of Claim 6, wherein the first hinge member (110) is pivotably rotatable about a third axis (A₃) and wherein the third axis (A₃) is configured to translate along the first sliding track (130).

8. The hinge mechanism (100) of any preceding Claim, further comprising an actuator (170) configured to be coupled to the flight control member (150) and the aircraft component (160), the actuator (170) being configured to facilitate movement of the flight control member (150) relative to the aircraft component (160).

9. The hinge mechanism (100) of Claim 8, wherein the actuator (170) is configured to be mounted to a bottom surface (154) of the flight control member (150).

10. An aircraft (1102) comprising:
an aircraft component (160);
a flight control member (150) having a top surface (152) hingedly coupled to and movable relative to the aircraft component (160) having a top surface (162); and
the hinge mechanism (100) of any preceding Claim, wherein the hinge mechanism (100) is coupled to the aircraft component (160) and the flight control member (150).

11. A method (200) for actuating a flight control member (150) having a top surface (152) relative to an aircraft component (160) having a top surface (162) between at least a stowed position (10) to a deployed position (20) with an actuator (170), the method (200) comprising:
coupling (210) a hinge mechanism (100) to the flight control member (150),
wherein the hinge mechanism (100) is the hinge mechanism of claim 1;
coupling (220) the hinge mechanism (100) to the aircraft component (160); and
actuating (230) the hinge mechanism (100) between at least the stowed position (10) and the deployed position (20), the hinge mechanism (100) further comprising:
a first sliding track (130) coupled to the aircraft component (160); and
a second sliding track (140) coupled to the flight control member (150).

12. The method of Claim 11, wherein the actuating (230) comprises sliding the first hinge member (110) along the first sliding track (130) and sliding the second hinge member (120) along the second sliding track (140).

13. The method (200) of Claim 11 or 12, wherein the first hinge member (110) is coupled to the flight control member (150) with a first rotating pin joint (116).

14. The method (200) of any of Claims 11-13, wherein the first hinge member (110) comprises a first extension (112) and a second extension (114), and wherein the first extension (112) and a second extension (114) define an angle (θ).

15. The method (200) of any of claims 11-14, wherein the first hinge member (110) is pivotably rotatable about a third axis (A₃) and wherein the third axis (A₃) is configured to translate along the first sliding track (130).

## Patentansprüche

1. Scharniermechanismus (100) zum gelenkigen Koppeln eines Flugsteuerelements (150) mit einer oberen Oberfläche (152) mit einer Flugzeugkomponente (160) mit einer oberen Oberfläche (162), wobei der Scharniermechanismus (100) Folgendes umfasst:
ein erstes Scharnierelement (110), das dazu konfiguriert ist, um eine erste Achse (A₁) schwenkbar mit dem Flugsteuerelement (150) gekoppelt zu sein, und dazu konfiguriert ist, gleitend mit der Flugzeugkomponente (160) gekoppelt zu sein; und
ein zweites Scharnierelement (120), das dazu konfiguriert ist, um eine zweite Achse (A₂) schwenkbar mit der Flugzeugkomponente (160) gekoppelt zu sein, und dazu konfiguriert ist, gleitend mit dem Flugsteuerelement (150) gekoppelt zu sein,
wobei das erste Scharnierelement (110) um eine zentrale Achse (A_{C}) schwenkbar mit dem zweiten Scharnierelement (120) gekoppelt ist, und
wobei das erste Scharnierelement (110) und das zweite Scharnierelement (120) dazu konfiguriert sind, eine Bewegung des Flugsteuerelements (150) relativ zu der Flugzeugkomponente (160) zwischen mindestens einer verstauten Position (10) und einer ausgefahrenen Position (20) zusammenwirkend zu ermöglichen.

2. Scharniermechanismus (100) nach Anspruch 1, wobei der Scharniermechanismus (100) so konfiguriert ist, dass die obere Oberfläche (152) des Flugsteuerelements (150) im Wesentlichen mit der oberen Oberfläche (162) der Flugzeugkomponente (160) ausgerichtet ist, wenn sich der Scharniermechanismus (100) in der verstauten Position (10) befindet.

3. Scharniermechanismus (100) nach Anspruch 1 oder 2, wobei der Scharniermechanismus (100) so konfiguriert ist, dass die obere Oberfläche (152) des Flugsteuerelements (150) und die obere Oberfläche (162) der Flugzeugkomponente (160) eine effektiv kontinuierliche aerodynamische Oberfläche (190) definieren, wenn sich der Scharniermechanismus (100) in der verstauten Position (10) befindet.

4. Scharniermechanismus (100) nach einem der vorhergehenden Ansprüche, wobei der Scharniermechanismus (100) so konfiguriert ist, dass die obere Oberfläche (152) des Flugsteuerelements (150) von der oberen Oberfläche (162) der Flugzeugkomponente (160) versetzt ist, wenn sich der Scharniermechanismus (100) in der ausgefahrenen Position (20) befindet, sodass die obere Oberfläche (152) des Flugsteuerelements (150) und die obere Oberfläche (162) der Flugzeugkomponente (160) einen aerodynamischen Winkel (θ_{A}) definieren.

5. Scharniermechanismus (100) nach einem der vorhergehenden Ansprüche, wobei das erste Scharnierelement (110) eine erste Verlängerung (112) und eine zweite Verlängerung (114) umfasst, die sich radial von der zentralen Achse (A_{C}) erstrecken, und wobei die erste Verlängerung (112) und eine zweite Verlängerung (114) einen Winkel (θ) definieren.

6. Scharniermechanismus (100) nach einem der vorhergehenden Ansprüche, ferner umfassend eine erste Gleitbahn (130), die dazu konfiguriert ist, mit der Flugzeugkomponente (160) gekoppelt zu werden.

7. Scharniermechanismus (100) nach Anspruch 6, wobei das erste Scharnierelement (110) schwenkbar um eine dritte Achse (A₃) drehbar ist, und wobei die dritte Achse (A₃) dazu konfiguriert ist, sich entlang der ersten Gleitbahn (130) zu verschieben.

8. Scharniermechanismus (100) nach einem der vorhergehenden Ansprüche, ferner umfassend einen Aktuator (170), der dazu konfiguriert ist, mit dem Flugsteuerelement (150) und der Flugzeugkomponente (160) gekoppelt zu sein, wobei der Aktuator (170) dazu konfiguriert ist, eine Bewegung des Flugsteuerelements (150) relativ zu der Flugzeugkomponente (160) zu ermöglichen.

9. Scharniermechanismus (100) nach Anspruch 8, wobei der Aktuator (170) dazu konfiguriert ist, an einer unteren Oberfläche (154) des Flugsteuerelements (150) montiert zu sein.

10. Flugzeug (1102), umfassend:
eine Flugzeugkomponente (160);
ein Flugsteuerelement (150) mit einer oberen Oberfläche (152), die gelenkig mit der Flugzeugkomponente (160) mit einer oberen Oberfläche (162) gekoppelt und relativ zu dieser beweglich ist; und
den Scharniermechanismus (100) nach einem der vorhergehenden Ansprüche, wobei der Scharniermechanismus (100) mit der Flugzeugkomponente (160) und dem Flugsteuerelement (150) gekoppelt ist.

11. Verfahren (200) zum Betätigen eines Flugsteuerelements (150) mit einer oberen Oberfläche (152) relativ zu einer Flugzeugkomponente (160) mit einer oberen Oberfläche (162) zwischen mindestens einer verstauten Position (10) in eine ausgefahrene Position (20) mit einem Aktuator (170), wobei das Verfahren (200) Folgendes umfasst:
Koppeln (210) eines Scharniermechanismus (100) mit dem Flugsteuerelement (150), wobei der Scharniermechanismus (100) der Scharniermechanismus nach Anspruch 1 ist;
Koppeln (220) des Scharniermechanismus (100) mit der Flugzeugkomponente (160); und
Betätigen (230) des Scharniermechanismus (100) zwischen mindestens der verstauten Position (10) und der ausgefahrenen Position (20), wobei der Scharniermechanismus (100) ferner Folgendes umfasst:
eine erste Gleitbahn (130), die mit der Flugzeugkomponente (160) gekoppelt ist; und
eine zweite Gleitbahn (140), die mit dem Flugsteuerelement (150) gekoppelt ist.

12. Verfahren nach Anspruch 11, wobei das Betätigen (230) das Gleiten des ersten Scharnierelements (110) entlang der ersten Gleitbahn (130) und das Gleiten des zweiten Scharnierelements (120) entlang der zweiten Gleitbahn (140) umfasst.

13. Verfahren (200) nach Anspruch 11 oder 12, wobei das erste Scharnierelement (110) mit einem ersten Drehzapfengelenk (116) mit dem Flugsteuerelement (150) gekoppelt ist.

14. Verfahren (200) nach einem der Ansprüche 11-13, wobei das erste Scharnierelement (110) eine erste Verlängerung (112) und eine zweite Verlängerung (114) umfasst, und wobei die erste Verlängerung (112) und eine zweite Verlängerung (114) einen Winkel (θ) definieren.

15. Verfahren (200) nach einem der Ansprüche 11-14, wobei das erste Scharnierelement (110) schwenkbar um eine dritte Achse (A₃) drehbar ist, und wobei die dritte Achse (A₃) dazu konfiguriert ist, sich entlang der ersten Gleitbahn (130) zu verschieben.

## Revendications

1. Mécanisme d'articulation (100) pour coupler de manière articulée un élément de commande de vol (150) ayant une surface supérieure (152) à un composant d'aéronef (160) ayant une surface supérieure (162), le mécanisme d'articulation (100) comprenant :
un premier élément d'articulation (110) configuré pour être couplé de manière pivotante à l'élément de commande de vol (150) autour d'un premier axe (A₁) et configuré pour être couplé de manière coulissante au composant d'aéronef (160) ; et
un deuxième élément d'articulation (120) configuré pour être couplé de manière pivotante au composant d'aéronef (160) autour d'un second axe (A₂) et configuré pour être couplé de manière coulissante à l'élément de commande de vol (150),
le premier élément d'articulation (110) étant couplé de manière pivotante au second élément d'articulation (120) autour d'un axe central (A_{C}), et
le premier élément d'articulation (110) et le second élément d'articulation (120) étant configurés pour faciliter de façon coopérative le déplacement de l'élément de commande de vol (150) par rapport au composant d'aéronef (160) entre au moins une position escamotée (10) et une position déployée (20).

2. Mécanisme d'articulation (100) selon la revendication 1, dans lequel le mécanisme d'articulation (100) est configuré de telle sorte que la surface supérieure (152) de l'élément de commande de vol (150) soit sensiblement alignée avec la surface supérieure (162) du composant d'aéronef (160) lorsque le mécanisme d'articulation (100) est dans la position escamotée (10).

3. Mécanisme d'articulation (100) selon la revendication 1 ou 2, dans lequel le mécanisme d'articulation (100) est configuré de telle sorte que la surface supérieure (152) de l'élément de commande de vol (150) et la surface supérieure (162) du composant d'aéronef (160) définissent une surface aérodynamique effectivement continue (190) lorsque le mécanisme d'articulation (100) est dans la position escamotée (10).

4. Mécanisme d'articulation (100) selon l'une quelconque des revendications précédentes, dans lequel le mécanisme d'articulation (100) est configuré de telle sorte que la surface supérieure (152) de l'élément de commande de vol (150) soit décalée par rapport à la surface supérieure (162) du composant d'aéronef (160) lorsque le mécanisme d'articulation (100) est dans la position déployée (20) de telle sorte que la surface supérieure (152) de l'élément de commande de vol (150) et la surface supérieure (162) du composant d'aéronef (160) définissent un angle aérodynamique (θ_{A}).

5. Mécanisme d'articulation (100) selon l'une quelconque des revendications précédentes, dans lequel le premier élément d'articulation (110) comprend une première extension (112) et une seconde extension (114) qui s'étendent radialement à partir de l'axe central (A_{C}), et dans lequel la première extension (112) et une seconde extension (114) définissent un angle (θ).

6. Mécanisme d'articulation (100) selon l'une quelconque des revendications précédentes, comprenant en outre une première glissière (130) configurée pour être couplée au composant d'aéronef (160).

7. Mécanisme d'articulation (100) selon la revendication 6, dans lequel le premier élément d'articulation (110) peut tourner de manière pivotante autour d'un troisième axe (A₃) et dans lequel le troisième axe (A₃) est configuré pour se déplacer le long de la première glissière (130).

8. Mécanisme d'articulation (100) selon l'une quelconque des revendications précédentes, comprenant en outre un actionneur (170) configuré pour être couplé à l'élément de commande de vol (150) et au composant d'aéronef (160), l'actionneur (170) étant configuré pour faciliter le déplacement de l'élément de commande de vol (150) par rapport au composant d'aéronef (160).

9. Mécanisme d'articulation (100) selon la revendication 8, dans lequel l'actionneur (170) est configuré pour être monté sur une surface inférieure (154) de l'élément de commande de vol (150).

10. Aéronef (1102) comprenant :
un composant d'aéronef (160) ;
un élément de commande de vol (150) ayant une surface supérieure (152) couplée de manière articulée au composant d'aéronef (160) et mobile par rapport à celuici, ayant une surface supérieure (162) ; et
le mécanisme d'articulation (100) selon l'une quelconque des revendications précédentes, lequel mécanisme d'articulation (100) est couplé au composant d'aéronef (160) et à l'élément de commande de vol (150).

11. Procédé (200) d'actionnement d'un élément de commande de vol (150) ayant une surface supérieure (152) par rapport à un élément d'aéronef (160) ayant une surface supérieure (162) entre au moins une position escamotée (10) et une position déployée (20) au moyen d'un actionneur (170), le procédé (200) comprenant :
l'accouplement (210) d'un mécanisme d'articulation (100) à l'élément de commande de vol (150), lequel mécanisme d'articulation (100) est le mécanisme d'articulation de la revendication 1 ;
l'accouplement (220) du mécanisme d'articulation (100) au composant d'aéronef (160) ; et
l'actionnement (230) du mécanisme d'articulation (100) entre au moins la position escamotée (10) et la position déployée (20), le mécanisme d'articulation (100) comprenant en outre :
une première glissière (130) couplée au composant d'aéronef (160) ; et
une seconde glissière (140) couplée à l'élément de commande de vol (150).

12. Procédé selon la revendication 11, dans lequel l'actionnement (230) comprend le coulissement du premier élément d'articulation (110) le long de la première glissière (130) et le coulissement du second élément d'articulation (120) le long de la seconde glissière (140).

13. Procédé (200) selon la revendication 11 ou 12, dans lequel le premier élément d'articulation (110) est couplé à l'élément de commande de vol (150) au moyen d'une première articulation à axe rotatif (116).

14. Procédé (200) selon l'une quelconque des revendications 11 à 13, dans lequel le premier élément d'articulation (110) comprend une première extension (112) et une seconde extension (114), et dans lequel la première extension (112) et une seconde extension (114) définissent un angle (θ).

15. Procédé (200) selon l'une quelconque des revendications 11 à 14, dans lequel le premier élément d'articulation (110) peut tourner de manière pivotante autour d'un troisième axe (A₃) et dans lequel le troisième axe (A₃) est configuré pour se déplacer le long de la première glissière (130).
